# EUROPEAN PATENT APPLICATION

(11) **EP 4 344 214 A1**
(43) Date of publication of application: **27.03.2024**
(21) Application number: 22880170.0
(22) Date of filing: 29.09.2022
(51) Int. Cl.: H04N 21/233, H04N 21/254, H04N 21/431, H04N 21/458

(54) **INFORMATION DISPLAY METHOD AND APPARATUS, AND ELECTRONIC DEVICE AND STORAGE MEDIUM**

(30) Priority: 12.10.2021 CN 202111187899
(71) Applicant: Beijing Zitiao Network Technology Co., Ltd., Beijing 100190 (CN)
(72) Inventor: WANG, Yongzhuang, Beijing 100086 (CN); DING, Zhipeng, Beijing 100086 (CN); YE, Zeyu, Beijing 100086 (CN); TU, Tingpeng, Beijing 100086 (CN); PAN, Jian, Beijing 100086 (CN); ZHONG, Zhiqiang, Beijing 100086 (CN); LONG, Yin, Beijing 100086 (CN); ZHANG, Boqi, Beijing 100086 (CN)
(74) Representative: Dentons UK and Middle East LLP
(86) International application number: PCT/CN2022/122412
(87) International publication number: WO 2023/061231

(57) **Abstract**

Provided in the embodiments of the present disclosure are an information display method, apparatus, electronic device and storage medium. The method comprises: acquiring audio data of a recommended video of a target object; determining audio clip information of a target audio clip in the recommended video according to the audio data, wherein, the audio clip information comprises identification information and association information, and the target audio clip includes a preset keyword; and when an information acquisition request for the recommended video has been received, sending the audio clip information to a client terminal, such that the client terminal displays the association information if a target video clip corresponding to the target audio clip is played on the client terminal, wherein, the information acquisition request is sent by the client terminal.

## Description

### CROSS-REFERENCE TO RELATED APPLICATIONS

This application claims the priority of the Chinese patent application with application number 202111187899.9, filed to the China Patent Office on October 12, 2021, the entire content of which is incorporated into this application by reference.

### TECHNICAL FIELD

The embodiments of the present disclosure relate to the field of computer technology, for example, to an information display method, apparatus, electronic device, and storage medium.

### BACKGROUND

At present, when playing an advertising type video, item information of a recommended item may be displayed on a video playback interface, such as displaying an item picture or a purchase link of the recommended item, so as to facilitate viewing and purchasing of the recommended item.

However, in advertising type videos in related technologies, item information of a recommended item displayed is relatively simple, resulting in poor recommendation effect in advertising type videos.

### SUMMARY

Embodiments of the present disclosure provide an information display method, apparatus, electronic device, and storage medium to display diversified information and improve recommendation effect of videos.

In a first aspect, an embodiment of the present disclosure provides an information display method, comprising:
acquiring audio data of a recommended video of a target object;
determining audio clip information of a target audio clip in the recommended video according to the audio data, wherein the audio clip information comprises identification information and association information, and the target audio clip includes a preset keyword; and
in response to receiving an information acquisition request for the recommended video, sending the audio clip information to a client terminal, such that the client terminal displays the association information if a target video clip corresponding to the target audio clip is played on the client terminal, wherein the information acquisition request is sent by the client terminal.

In a second aspect, an embodiment of the present disclosure further provides an information display method, comprising: sending an information acquisition request for a recommended video of a target object to a server, and receiving audio clip information returned by the server based on the information acquisition request, wherein the audio clip information comprises identification information and association information of a target audio clip in the recommended video, and the target audio clip includes a preset keyword; and
playing the recommended video, and in response to the recommended video being played to a target video clip corresponding to the target audio clip, displaying the association information in a first display area of a video playback interface.

In a third aspect, an embodiment of the present disclosure further provides an information display apparatus, comprising:
a data acquisition module configured to acquire audio data of a recommended video of a target object;
an information determination module configured to determine audio clip information of a target audio clip in the recommended video according to the audio data, wherein the audio clip information comprises identification information and association information, and the target audio clip includes a preset keyword; and
an information sending module configured to, in response to receiving an information acquisition request for the recommended video, send the audio clip information to a client terminal, such that the client terminal displays the association information if a target video clip corresponding to the target audio clip is played on the client terminal, wherein the information acquisition request is sent by the client terminal.

In a fourth aspect, an embodiment of the present disclosure further provides an information display apparatus, comprising:
an information receiving module configured to send an information acquisition request for a recommended video of a target object to a server, and receive audio clip information returned by the server based on the information acquisition request, wherein the audio clip information comprises identification information and association information of a target audio clip in the recommended video, and the target audio clip includes a preset keyword; and
a video playback module configured to play the recommended video, and in response to the recommended video being played to a target video clip corresponding to the target audio clip, display the association information in a first display area of a video playback interface.

In a fifth aspect, an embodiment of the present disclosure further provides an electronic device, comprising:
at least one processor;
a memory configured to store at least one program,
when executed by the at least one processor, the at least one program causes the at least one processor to implement the information display methods in the embodiments of the present disclosure.

In a sixth aspect, an embodiment of the disclosure further provides a computer-readable storage medium having a computer program stored thereon, which, when executed by a processor, implements the information display methods in the embodiments of the disclosure.

### BRIEF DESCRIPTION OF THE DRAWINGS

Throughout the drawings, the like or similar reference signs indicate the like or similar elements. It should be understood that the drawings are schematic and the originals and elements are not necessarily drawn to scale.
FIG. 1 is a schematic flowchart of an information display method provided by an embodiment of the present disclosure;
FIG. 2 is a schematic flowchart of another information display method provided by an embodiment of the present disclosure;
FIG. 3 is a schematic flowchart of yet another information display method provided by an embodiment of the present disclosure;
FIG. 4 is a schematic diagram of a display method of association information provided by an embodiment of the present disclosure;
FIG. 5 is a schematic diagram of another display method of association information provided by an embodiment of the present disclosure;
FIG. 6 is a schematic flowchart of a fourth information display method provided by an embodiment of the present disclosure;
FIG. 7 is a schematic diagram of a moving method of association information provided by an embodiment of the present disclosure;
FIG. 8 is a schematic diagram of another moving method of association information provided by an embodiment of the present disclosure;
FIG. 9 is a schematic diagram of a second display area provided by an embodiment of the present disclosure;
FIG. 10 is a schematic diagram of another second display area provided by an embodiment of the present disclosure;
FIG. 11 is a structural block diagram of an information display apparatus provided by an embodiment of the present disclosure;
FIG. 12 is a structural block diagram of another information display apparatus provided by an embodiment of the present disclosure; and
FIG. 13 is a schematic structural diagram of an electronic device provided by an embodiment of the present disclosure.

### DETAILED DESCRIPTION

It should be understood that various steps recited in the method embodiments of the present disclosure can be executed in a different order, and/or executed in parallel. In addition, the method implementations may include additional steps and/or omit to perform illustrated steps. The scope of the present disclosure is not limited in this respect.

The term "including" and its variants as used herein are open includes, that is, "including but not limited to". The term "based on" means "based at least in part on. " The term "one embodiment" means "at least one embodiment"; the term "another embodiment" means "at least one additional embodiment"; the term "some embodiments" means "at least some embodiments." Related definitions of other terms will be given in following description.

It should be noted that the concepts of "first" and "second" etc. mentioned in the present disclosure are only used to distinguish between different apparatus, modules, or units, and are not used to limit the order of functions performed by these apparatus, modules or units or their interdependence.

It should be noted that modifiers of "one" and "a plurality of" mentioned in the present disclosure are illustrative and not restrictive, and those skilled in the art should understand that they should be construed as "at least one" unless the context clearly indicates otherwise.

The names of messages or information interacted between a plurality of apparatus in the embodiments of the present disclosure are only used for illustration, and are not used to limit the scope of these messages or information.

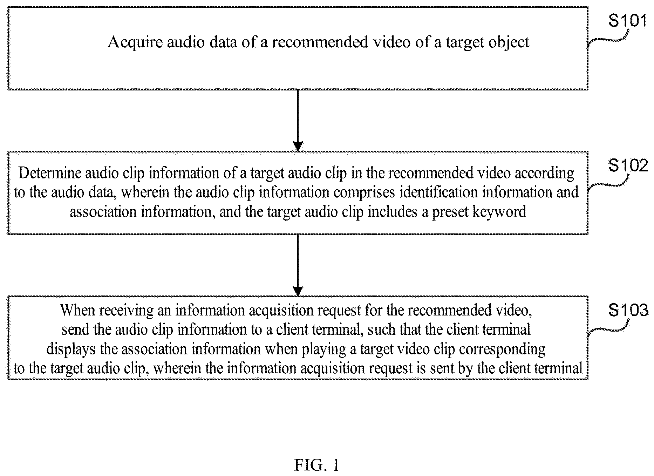

FIG. 1 is a schematic flowchart of an information display method provided by an embodiment of the present disclosure. The method may be performed by an information display apparatus, wherein the apparatus may be implemented by software and/or hardware, and may be configured in an electronic device, typically, may be configured in a server. The information display method provided by the embodiments of the present disclosure is suitable for scenarios of displaying information based on audio data of a recommended video. As shown in FIG. 1, the information display method provided by the embodiment may comprise:

S101. acquiring audio data of a recommended video of a target object.

Wherein, the recommended video may be a video that recommends a certain object to users, such as an advertising video or a marketing video, etc. Accordingly, the target object may be an object recommended in the recommended video, such as an activity or an item recommended in the recommended video. The object may be a real item or a virtual item, which is not limited in this embodiment.

In this embodiment, audio clip information of a target audio clip in the recommended video of the target obj ect may be predetermined by a server, so that when a client terminal plays the recommended video, it may determine the target audio clip according to the audio clip information and display association information.

Exemplarily, when the current conditions meet preset conditions for determining audio clip information of a target audio clip in a recommended video of a target object, for example, when a certain recommended video is a newly uploaded recommended video, that is, when the recommended video is a recommended video whose audio clip information has not yet been determined, the server may acquire audio data of the recommended video at the current moment, and determine the audio clip information of the target audio clip in the recommended video according to the audio data.

S102. determining audio clip information of a target audio clip in the recommended video according to the audio data, wherein the audio clip information comprises identification information and association information, and the target audio clip includes a preset keyword.

Wherein, the target audio clip may be an audio clip that contains the preset keyword in the audio data of the recommended video, that is, an audio clip with the preset keyword in corresponding text content, such as an audio clip corresponding to a sentence (including sentence segment) where the preset keyword is located. The preset keyword may be a keyword of a preset type, for example, a keyword related to preferential information (a word such as clearance, cost-effectiveness, price reduction, cost-effective, wholesale, instant discount, preferential, cheap, limited time, etc., or a sentence related to preferential information), a keyword related to description information (such as a word or a sentence related to size, color, shape, denomination, etc.), etc. The following description takes the preset keyword as a keyword related to preferential information as an example. The identification information of the target audio clip is information that may be used to identify the target audio clip, such as a flag of the target audio clip, an identity ID of the target audio clip, or start and end time information of the target audio clip in the recommended video, etc. The association information of the target audio clip may be information related to content broadcast in the target audio clip, such as the content broadcast in the target audio clip, summary information or key information of the content broadcast in the target audio clip, or information related to an object (i.e., target object) recommended by the target audio clip (such as preferential information), etc.

In this embodiment, when the server acquires the audio data of the recommended video, it can determine whether there is a target audio clip containing the preset keyword in the recommended video according to the audio data, and when determining that there is the target audio clip, it determines identification information and association information of the target audio clip.

Exemplarily, after acquiring the audio data of the recommended video of the target object, the server can perform speech recognition on the audio data, obtain speech recognition text corresponding to the audio data, determine whether the speech recognition text includes the preset keyword, and when the speech recognition text contains the preset keyword, determine that there is a target audio clip containing the preset keyword in the recommended video, and determine audio clip information of the target audio clip according to the position of the preset keyword, for example, determine the audio clip corresponding to a text sentence (including text sentence segment) where the preset keyword is located as the target audio clip, set identification information for the target audio clip, and acquire association information of the target audio clip, for example, extract summary information of a text sentence/sentence segment where the preset keyword is located as the association information of the target audio clip.

In addition, after obtaining the speech recognition text corresponding to the audio data of the recommended video of the target object, the server may also first divide the speech recognition text into at least one text sentence according to preset segmentation rules, such as according to grammar and semantic rules and/or punctuation marks, etc., determine whether there is a text sentence containing the preset keyword in the at least one text sentence, and when there is a text sentence containing the preset keyword in the at least one text sentence, determine whether there is a text sentence containing the preset keyword in the recommended video, determine the audio clip corresponding to the text sentence containing the preset keyword as the target audio clip, and determine audio clip information of the target audio clip, for example, set identification information for the target audio clip, and extract summary information of the text sentence/sentence segment where the preset keyword is located as association information of the target audio clip.

In this embodiment, the audio clip information of the target audio clip in the recommended video may be determined only according to the speech recognition text of the recommended video; or the audio clip information of the target audio clip in the recommended video may also be determined according to the speech recognition text of the recommended video and audio data characteristics of the recommended video, to improve the accuracy of the determined audio clip information of the target audio clip. At this time, the determining audio clip information of a target audio clip in the recommended video according to the audio data may comprise : performing speech recognition on the audio data, to obtain speech recognition text, and acquiring Mel-scale Frequency Cepstral Coefficients feature vector of the audio data; determining corresponding time information of each word in the audio recognition text in the audio data based on the Mel-scale Frequency Cepstral Coefficients feature vector; and determining the audio clip information of the target audio clip in the recommended video according to the speech recognition text and the time information.

Exemplarily, after acquiring audio data of a recommended video of a target object, a server may first perform speech recognition on the audio data to obtain speech recognition text of the recommended video; and extract Mel-scale Frequency Cepstral Coefficients (MFCCs) feature vector of the audio data, for example, obtain audio waveform information of the recommended video according to the audio data, perform frame segmentation on the audio waveform information according to a fixed time interval, and after the frame segmentation is completed, divide the audio waveform information into multiple audio waveform clips by using a sliding window with a fixed time length, and performs discrete Fourier transform on each audio waveform clip to obtain frequency domain information of the audio data, and perform Mel filtering on the frequency domain information to obtain an MFCC feature vector of the audio data. Then, determine corresponding time information of each word in the audio recognition text in the audio data (that is, in the recommended video) by using the obtained MFCC feature vector, for example, input the audio recognition text and the MFCC feature vector to a pre-trained detection model, and acquire start and end time of each word in the audio recognition text in the audio data output by the detection model, as the corresponding time information of each word in the audio data. Therefore, the target audio clip and the audio clip information of the target audio clip may be determined according to the speech recognition text and the time information of each word in the speech recognition text.

S103. when receiving an information acquisition request for the recommended video, sending the audio clip information to a client terminal, such that the client terminal displays the association information if a target video clip corresponding to the target audio clip is played on the client terminal, wherein the information acquisition request is sent by the client terminal.

Wherein, the target video clip may be a video clip corresponding to the target audio clip in the recommended video, that is, a video clip in the recommended video that is located between the start time node and the end time node corresponding to the target audio clip in the recommended video. The information acquisition request may be a request for acquiring the audio clip information of the target audio clip in the recommended video, and it may also be used to acquire the video data of the recommended video. For example, the information acquisition request may also be a video data acquisition request for the recommended video.

Exemplarily, a client terminal may acquire video data (including audio data) of a recommended video to be played from a server through a video data acquisition request, and acquire audio clip information of a target audio clip in the recommended video from the server through an information acquisition request. For example, when the client terminal wants to play a recommended video of a target object, for example, before, after or at the same time as the client terminal generates a video data acquisition request for the recommended video, it generates an information acquisition request carrying video identification of the recommended video, and sends the information acquisition request to the server. Accordingly, after receiving an information acquisition request sent by a certain client terminal, the server can parse the information acquisition request, obtain the video identification carried in the information acquisition request, acquire audio clip information of a target audio clip in the recommended video based on the video identification, and send the audio clip information to the client terminal. Therefore, the client terminal can determine the target audio clip in the recommended video according to the identification information in the audio clip information, play the recommended video, and display association information of the target audio clip contained in the audio clip information on a video playback interface if a target video clip corresponding to the target audio clip is played on the client terminal.

In addition, the client terminal may also acquire video data of the recommended video and audio clip information of the target audio clip in the recommended video from the server through an information acquisition request. At this time, exemplarily, the information acquisition request may be a video data acquisition request. For example, the client terminal may generate a video data acquisition request carrying video identification of the recommended video, and send the video data acquisition request to the server. Accordingly, after receiving a video data acquisition request sent by a certain client terminal, the server can parse the video data acquisition request, obtain the video identification carried in the video data acquisition request, acquire the video data of the recommended video and the audio clip information of the target audio clip in the recommended video based on the video identification, and return the video data and the audio clip information to the client terminal. Therefore, the client terminal may determine the target audio clip in the recommended video according to the identification information in the audio clip information, play the recommended video based on the video data, and display the association information of the target audio clip contained in the audio clip information in a video playback interface if a target video clip corresponding to the target audio clip is played.

In this embodiment, the server can predetermine the target audio clip containing the preset keyword in the recommended video and the association information of the target audio clip, and send it to the client terminal in response to the information acquisition request from the client terminal, therefore, when playing the recommended video, the client terminal may display information based on the voice broadcast in the recommended video. For example, when a voice related to preferential information for a target object is played in a video, the preferential information for the target object is automatically displayed on a video playback interface; and/or, when a description voice about a target object is played in a video, target object description information is automatically displayed on a video playback interface, etc., which can realize conversion between audio dimension information and visual dimension information in the video, strengthen users' understanding of the audio dimension information in the video, and improve the recommendation effect of the target object. In addition, since there is no need to display information based on currently played video screen, therefore, the target object does not need to be an actual item that can be displayed or must appear in the video screen, nor does it require a video producer to fully understand a recommended video in advance and determine when to display information, which can expand application scopes of recommended videos, realize recommendations for actual items or even virtual items, reduce production cost of recommended videos, and thereby reduce recommendation cost of target recommendations.

In this embodiment, after the server initially determines the audio clip information of the target audio clip in the recommended video of the target object, it may also periodically or regularly detect whether the video content (including audio content) of the recommended video has changed, and when detecting that it changes, re-identify a target audio clip in the recommended video according to the audio data of the recommended video after the change, and determine the audio clip information of the target audio clip, to avoid misalignment or mismatch between the video sound and the displayed association information when the client terminal plays the recommended video, ensuring the real-time of and validity of the displayed association information. At this time, optionally, after the determining audio clip information of a target audio clip in the recommended video according to the audio data, it further comprises: when detecting that the content of the recommended video changes, re-determining the audio clip information of the target audio clip in the recommended video according to the changed audio data of the recommended video.

The information display method provided by this embodiment acquires audio data of a recommended video of a target object; determines identification information and association information of a target audio clip containing a preset keyword in the recommended video according to the audio data; when receiving an information acquisition request for the recommended video sent by a client terminal, sends the identification information and the association information of the target audio clip to the client terminal, such that the client terminal displays the association information if a target video clip corresponding to the target audio clip is played on the client terminal. This embodiment, by adopting the above technical solutions to control the client terminal to display the association information of a specific audio clip containing a preset keyword in a video playback interface when playing the specific voice, may not only display diversified information; but also realize conversion between audio dimension and visual dimension, strengthen the user's impression towards the voice broadcast in the recommended video, improve the recommendation effect of the recommended video, expand the application scope of the recommended video, and reduce the production cost of the recommended video.

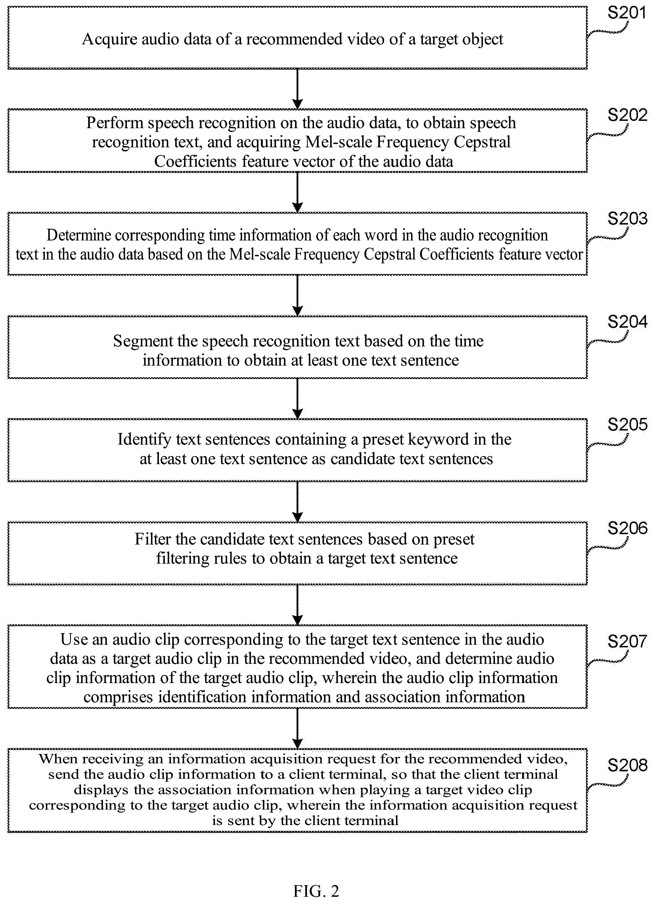

FIG. 2 is a schematic flowchart of another information display method provided by an embodiment of the present disclosure. The solution in this embodiment may be combined with at least one optional solution in the above embodiment. Optionally, the determining the audio clip information of the target audio clip in the recommended video according to the speech recognition text and the time information comprises: segmenting the speech recognition text based on the time information to obtain at least one text sentence; identifying text sentences containing a preset keyword in the at least one text sentence as candidate text sentences; filtering the candidate text sentences based on a preset filtering rule to obtain a target text sentence; using a audio clip corresponding to the target text sentence in the audio data as a target audio clip in the recommended video, and determining audio clip information of the target audio clip.

Accordingly, as shown in FIG. 2, the information display method provided by this embodiment may comprise:
S201. acquiring audio data of a recommended video of a target object.
S202. performing speech recognition on the audio data, to obtain speech recognition text, and acquiring Mel-scale Frequency Cepstral Coefficients feature vector of the audio data.
S203. determining corresponding time information of each word in the audio recognition text in the audio data based on the Mel-scale Frequency Cepstral Coefficients feature vector.
S204. segmenting the speech recognition text based on the time information to obtain at least one text sentence.

In this embodiment, when segmenting the speech recognition text of the recommended video into sentences, the start and end time of each word in the speech recognition text being broadcast in the audio data may be considered to improve the accuracy of the segmented text sentences, thereby improving the rationality of subsequently determined target audio clip and the audio clip information of the target audio clip.

Exemplarily, a Named Entity Recognition (NER) model for identifying a target audio clip in a recommended video may be trained in advance based on a plurality of training samples. Therefore, after obtaining speech recognition text of the recommended video and time information of each word in the speech recognition text, the speech recognition text and the time information may be input into the NER model, and the speech recognition text is divided into sentences by the NER model based on the time information of each word in the speech recognition text, combined with grammar and semantic information and punctuation marks, to obtain at least one text sentence.

S205. identifying text sentences containing a preset keyword in the at least one text sentence as candidate text sentences.

Exemplarily, after dividing a speech recognition text into at least one text sentence, it may be determined for each text sentence whether the text sentence contains a preset keyword. If the text sentence contains the preset keyword, the text sentence is determined as a candidate text sentence; and if the text sentence does not contain the preset keyword, the text sentence is regarded as a non-candidate text sentence.

In this embodiment, when determining whether each text sentence contains a preset keyword, the preset keyword corresponding to each text sentence may be a keyword in the same keyword list or a keyword in a different keyword list. For example, keyword lists corresponding to different industries can be pre-set. When determining whether a certain text sentence contains a preset keyword, all keywords in multiple keyword lists can be used as preset keywords corresponding to the text sentence, and it is determined whether the text sentence contains at least one preset keyword; also, the industry to which the text sentence belongs may be determined first, and keywords in the keyword list corresponding to the industry are used as preset keywords corresponding to the text sentence, and it is determined whether the text sentence contains at least one preset keyword.

Take preferential information as an example. Since preferential information has different expressions in different industries, for example, price preferential information may be expressed with "gift code" in the gaming industry, while in the e-commerce industry it may be expressed with "buy X, get X free", "XXX off on every XXX", etc., so, in this embodiment, keywords in the keyword list corresponding to the industry to which each text statement belongs can be optionally used as the preset keywords that need to be identified for the text statement. For example, after dividing the speech recognition text into at least one text sentence, the NER model may classify the at least one text sentence according to industry; after the classification is completed, it can determine whether each text sentence contains preset keywords of the industry to which it belongs, and use the text sentences containing the preset keywords of the industry to which it belongs as candidate text sentences; combine the time information of each word in the candidate text sentences in the audio data to obtain the start time and duration of each candidate sentence in the audio data, and output each candidate text sentence and the start time and duration of each candidate text sentence, and may also output an industry label of the industry to which each candidate text sentence belongs. Therefore, a server can store each candidate text sentence output by the NER model, the starting time and duration of each candidate text sentence, and the industry label of each candidate text sentence to perform subsequent operations.

S206. filtering the candidate text sentences based on preset filtering rules to obtain a target text sentence.

In this embodiment, after obtaining the candidate text sentences, an audio clip corresponding to each candidate text sentence in the audio data of the recommended video may be directly used as a target recommended video clip of the recommended video; or multiple candidate text sentences may also be filtered based on preset filtering rules to improve the display effect of association information of the final obtained target audio clip.

In this embodiment, the preset filtering rules may be flexibly set as needed. For example, multiple candidate text sentences may be filtered based on a preset time range, sentence length, industry type, and/or text quality. For example, candidate text sentences may be filtered so that a candidate text sentence whose start and end time in the audio data is within a preset time range, sentence length is within a preset sentence length range, industry type matches the industry type of the recommended video, and text quality is higher than a preset text quality threshold is used as a target text sentence. Wherein, the text quality of the candidate text sentence may be evaluated and determined by a pre-trained text quality evaluation model.

It may be understood that when filtered multiple candidate text sentences that meet the requirements based on the preset filtering rules, one of the multiple candidate text sentences (for example, the first candidate text sentence or the one with the highest text quality, etc.) may be used as a target text sentence; or all the multiple candidate text sentences may be used as target text sentences.

S207. using an audio clip corresponding to the target text sentence in the audio data as a target audio clip in the recommended video, and determining audio clip information of the target audio clip, wherein the audio clip information comprises identification information and association information.

Exemplarily, an audio clip corresponding to the target text sentence in the audio data may be determined as a target audio clip of the recommended video according to the start time and duration of the target text sentence, and identification information and association information of the target audio clip may be determined.

When determining a target audio clip, exemplarily, when there is only one target text sentence, an audio clip in the audio data with the same start and end time as the target text sentence may be used as the target audio clip; when there are multiple target text sentences, for each target text sentence, a audio clip in the audio data with the same start and end time as the target text sentence may be used as the target audio clip, thereby obtaining multiple target audio clips; or the multiple target text sentences may be sorted according to the order in which they are broadcast in the audio data, and an audio clip whose start time is the start time of the first target text sentence and end time is the end time of the last text sentence in the audio clip is used as the target audio clip, which is not limited in this embodiment.

When determining the audio clip information of the target audio clip, exemplarily, the identification information of the target audio clip may be generated according to the preset generation rules or time node information corresponding to the target audio clip (such as start and end time information, or start time information and duration information, etc.) as the identification information of the target audio clip; and/or, the target text sentence corresponding to the target audio clip or the summary information of the target text sentence corresponding to the target audio clip is used as the association information of the target audio clip. In this embodiment, optionally, the time node information corresponding to the target audio clip is used as the identification information of the target audio clip, and the target text sentence corresponding to the target audio clip is used as the association information of the target audio clip to simplify the amount of calculation required to determine the audio clip information and improve the broadcasting effect of the target audio clip. At this time, the determining audio clip information of the target audio clip may comprise: using time node information corresponding to the target audio clip in the recommended video as identification information of the target audio clip, and using the target text sentence as association information of the target audio clip.

S208. when receiving an information acquisition request for the recommended video, sending the audio clip information to a client terminal, so that the client terminal displays the association information if a target video clip corresponding to the target audio clip is played on the client terminal, wherein the information acquisition request is sent by the client terminal.

The information display method provided by this embodiment performs text segmentation based on time information of each word in audio data in speech recognition text, determines candidate text sentences in the segmented text sentences, and filters the determined candidate text sentences, which can improve the accuracy of the determined target audio clips, improve the effect of displaying association information of the target audio clips, and avoid excessive interference with the user's viewing of the video, and improve the viewing experience of the user.

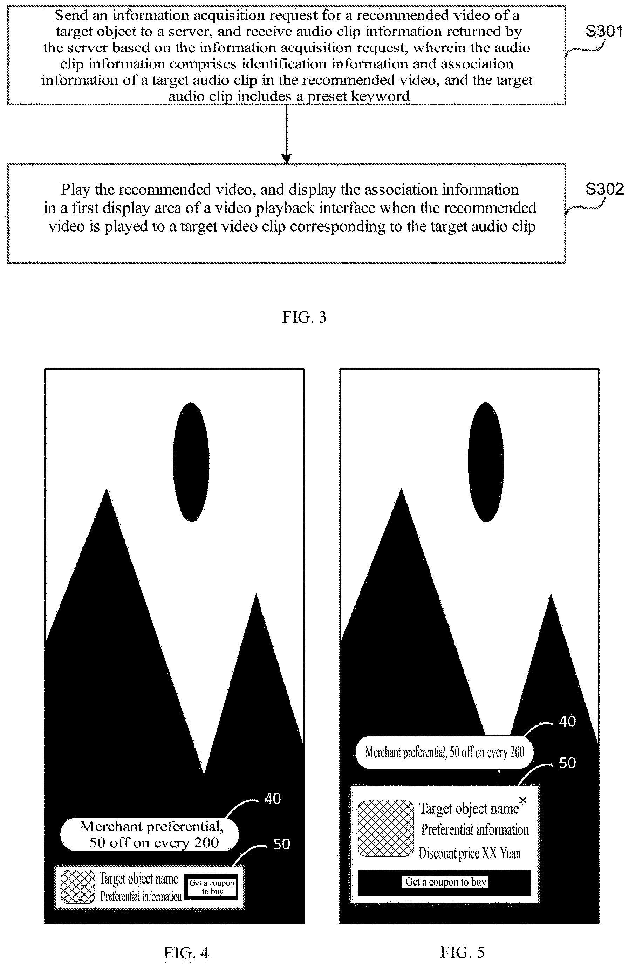

FIG. 3 is a schematic flowchart of an information display method provided by an embodiment of the present disclosure. The method may be performed by an information display apparatus, wherein the apparatus may be implemented by software and/or hardware, and may be configured in an electronic device, typically, may be configured in a mobile phone or a tablet. The information display method provided by the embodiments of the present disclosure is suitable for scenarios of displaying information based on audio data of a recommended video. As shown in FIG. 3, the information display method provided by the embodiment may comprise:

S301. sending an information acquisition request for a recommended video of a target object to a server, and receiving audio clip information returned by the server based on the information acquisition request, wherein the audio clip information comprises identification information and association information of a target audio clip in the recommended video, and the target audio clip includes a preset keyword.

In this embodiment, before playing the recommended video, a client terminal may acquire the association information of the target audio clip in the recommended video from the server, so that it may display the association information to a user if a target video clip corresponding to the target audio clip is played.

Exemplarily, a user may watch a video through a video playback interface. Accordingly, a client terminal may display the video playback interface, switch the video played in the video playback interface based on a video switching operation by the user, or automatically switch the video played in the video playback interface according to preset switching rules, and generate an information acquisition request when switching to a recommended video of a certain object (that is, a target object) is needed, or generate a video data acquisition request and an information acquisition request and send them to a server. Therefore, the server may acquire video data and audio clip information of the recommended video based on the information acquisition request, or acquire video data of the recommended video based on the video data acquisition request and acquire audio clip information of the recommended video based on the information acquisition request, and return them to the client terminal. Therefore, the client terminal may receive the video data of the recommended video and the audio clip information of the target audio clip included in the recommended video sent by the server.

S302. playing the recommended video, and displaying the association information in a first display area of a video playback interface when the recommended video is played to a target video clip corresponding to the target audio clip.

Wherein, the first display area may be an area in the video playback interface for displaying the association information, whose size and position may be set as needed, for example, it may be set to have the same width as a second display area, and/or, it may be set to be located above the second display area, in the middle or on one side of the video playback interface, etc.

Exemplarily, a client terminal may determine a target audio clip based on identification information of the target audio clip, play the recommended video in a video playback interface based on video data of the recommended video, and display association information of a target audio clip in a first display area 40 of the video playback interface when playing a target video clip corresponding to the target audio clip, as shown in FIGS. 4 and 5. For example, after a recommended video is slided into the screen, the client terminal may calculate its height and initialize the Hybrid framework, call JSB to load a display container for association information and set it to be invisible to the user, for example, set it to transparent; when the recommended video is played to a target video clip corresponding to the target audio clip, the display container is set to be visible to the user, and the association information of the target audio clip is displayed in the display container.

In this embodiment, when the client terminal plays the recommended video, the information may be displayed based on the voice broadcast in the recommended video. For example, when a voice related to preferential information of a target object is played in the video, the preferential information of the target object is automatically displayed on the video playback interface; and/or, when a description voice of the target object is played in the video, description information of the target object is automatically displayed on the video playback interface, etc., which can realize conversion between audio dimension information and visual dimension information in the video, strengthen users' understanding of the audio dimension information in the video, and improve the recommendation effect of target object. In addition, since there is no need to display information based on currently played video screen, therefore, the target object does not need to be an actual item that can be displayed or must appear in the video screen, nor does it require a video producer to fully understand a recommended video in advance and determine when to display information, which can expand the application scopes of recommended videos, realize recommendations for actual items or even virtual items, reduce production cost of recommended videos, and thereby reduce recommendation cost of target recommendations.

In one implementation, the displaying the association information in a first display area of a video playback interface comprises: displaying a target text sentence corresponding to the target audio clip in the first display area of the video playback interface, wherein the target text sentence is obtained by the server performing speech recognition on the target audio clip.

In the above implementation, the association information of the target audio clip may be a target text sentence corresponding to the target audio clip, that is, text content corresponding to the target audio clip. Therefore, when playing a audio clip containing a preset keyword, by displaying a text sentence corresponding to the audio clip in a video playback interface, for example, displaying preferential information currently broadcast in the form of text in the video playback interface, it achieves the effect of what-you-hear-is-what-you-see, strengthenes users' impression and understanding of the content broadcast in audio clips, and improves the probability of users accepting recommendations for target objects.

Exemplarily, a client terminal may play a recommended video of a target object in a video playback interface, and when the recommended video is played to a target video clip corresponding to the target audio clip containing a preset keyword, the client terminal may display a target text sentence corresponding to the target audio clip in a first display area of a video playback interface. For example, when the recommended video is played to a video clip corresponding to an audio clip containing a keyword related to preferential information, the client terminal may display the preferential information broadcast in the video in the first display area of the video playback interface. Wherein, all of the display states of the target text sentence, such as font, font size and/or color, etc., may be set as needed.

In the above implementation, after the target text sentence is displayed, the target text sentence may include text currently being broadcast in the recommended video and text currently not being broadcast in the recommended video (including text that has been broadcast in the recommended video and/or text that has not yet been broadcast) . Therefore, during the playback of the recommended video, the text currently being broadcast in the recommended video and the text currently not being broadcast in the recommended video may be displayed in the same display states; or the text currently being broadcast in the recommended video and the text currently not being broadcast in the recommended video may be displayed in different display states, thereby increasing users' attention and impression to the text information (especially the text that is currently being broadcast in the text information), and improving the amusement when displaying text information. At this time, optionally, the displaying a target text sentence corresponding to the target audio clip in the first display area of the video playback interface comprises: displaying current broadcast text in the target text sentence using a first display state, and displaying non-current broadcast text in the target text sentence using a second display state in a first display area of a video playback interface. Wherein, the first display state and the second display state may be two display states with different display modes such as font, font size and/or color etc.

It should be noted that, when a target text sentence cannot be displayed in the first display area at the same time, part of the target text sentence including text currently broadcast in the recommended video may be displayed in the first display area, and as the recommended video is being played, the text displayed in the first display area is updated, for example, the text displayed in the first display area is updated by scrolling or flipping, etc. Further, when there is no target audio clip in a recommended video, association information of target audio clip may not be displayed during the playback of the recommended video.

In this embodiment, display duration of the association information of the target audio clip may be set according to the need, for example, the association information of the target audio clip may be set to display a preset duration (for example, 3s or 5s etc.) ; or it is possible to set the target audio clip to be displayed until the end of the recommended video playback or the end of a target video clip playback, etc.

Considering the association of the displayed association information to the currently played content, this embodiment may optionally display the association information of the target audio clip in the first display area only when the target audio clip is played, i.e., only during the process of playing a target video clip corresponding to the target audio clip. At this time, the information display method provided by this embodiment further comprises: when the playback of the target video clip is completed, stopping displaying the association information in the first display area, for example, stopping displaying the association information of the target audio clip in any position on the video playback interface, or moving the association information of the target audio clip to be displayed at a display area other than the first display area on the video playback interface, etc.

The information display method provided by this embodiment sends an information acquisition request for a recommended video of a target object to a server, and receives identification information and association information of a target audio clip containing a preset keyword returned by the server based on the information acquisition request; plays the recommended video, and when the recommended video is played to a target video clip corresponding to the target audio clip, displays the association information in a first display area of a video playback interface. This embodiment, by adopting the above technical solutions to display the association information of a specific voice containing a preset keyword in a video playback interface when the recommended video is played to the specific voice, may not only display diversified information; but also realize conversion between audio dimension and visual dimension, strengthen the user's impression towards the voice broadcast in the recommended video, improve the recommendation effect of the recommended video, expand the application scope of the recommended video, and reduce the production cost of the recommended video.

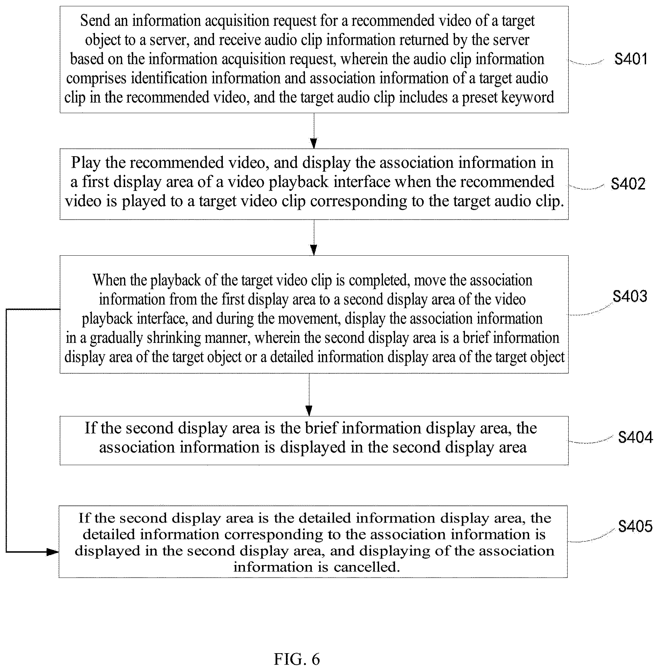

FIG. 6 is a schematic flowchart of another information display method provided by an embodiment of the present disclosure. The solution in this embodiment may be combined with at least one optional solution in the above embodiment. Optionally, the information display method provided by this embodiment further comprises: when the playback of the target video clip is completed, moving the association information from the first display area to a second display area of the video playback interface, and during the movement, displaying the association information in a gradually shrinking manner, wherein the second display area is a brief information display area of the target object or a detailed information display area of the target object.

Optionally, after moving the association information from the first display area to the second display area of the video playback interface, it further comprises: if the second display area is the brief information display area, the association information is displayed in the second display area; if the second display area is the detailed information display area, the detailed information corresponding to the association information is displayed in the second display area, and displaying of the association information is cancelled.

Accordingly, as shown in FIG. 6, the information display method provided by this embodiment may comprise:
S401. sending an information acquisition request for a recommended video of a target object to a server, and receiving audio clip information returned by the server based on the information acquisition request, wherein the audio clip information comprises identification information and association information of a target audio clip in the recommended video, and the target audio clip includes a preset keyword.
S402. playing the recommended video, and displaying the association information in a first display area of a video playback interface when the recommended video is played to a target video clip corresponding to the target audio clip.
S403. when the playback of the target video clip is completed, moving the association information from the first display area to a second display area of the video playback interface, and during the movement, displaying the association information in a gradually shrinking manner, executing S404 or S405, wherein the second display area is a brief information display area of the target object or a detailed information display area of the target object.

In this embodiment, when the playback of the target video clip is completed, it is possible to control the association information displayed in the first display area to move to the second display area to guide the user to view object information (such as brief information or detailed information) of the target object displayed in the second display area and interact within the second display area.

Wherein, the second display area may be a brief information display area or a detailed information display area of a target object, the brief information display area may be an area used to display brief information (such as brief introduction information) of the target object in a video playback interface, and the detailed information display area may be an area used to display detailed information (such as detailed introduction information) of the target object in the video playback interface, which may be a different area from the brief information display area, or may be obtained by expanding from the brief information display area. The brief information may include information such as picture, name, and preferential information, etc. of the target object; and the detailed information may include information such as picture, name, price, and preferential information, etc. of the target object.

Continue to refer to FIGS. 4 and 5, when the client terminal plays a recommended video of a target object in a video playback interface, it may display brief information and/or detailed information of the target object in the second display area 50 of the video playback interface, for example, display the brief information and the detailed information simultaneously; or, display the brief information and the detailed information at different time nodes. As an example, when the recommended video is played to a first time node, the brief information of the target object is displayed in the brief information display area of the video playback interface, as shown in FIG. 4; when the recommended video is played to a second time node, the detailed information of the target object is displayed in the detailed information display area of the video playback interface, and the displaying of the brief information is cancelled, as shown in FIG. 5. In addition, when the detailed information of the target object is displayed, the user can also instruct the client terminal to switch the currently displayed detailed information of the target object back to the brief information of the target object by performing a switching operation (such as a detailed information closing operation).

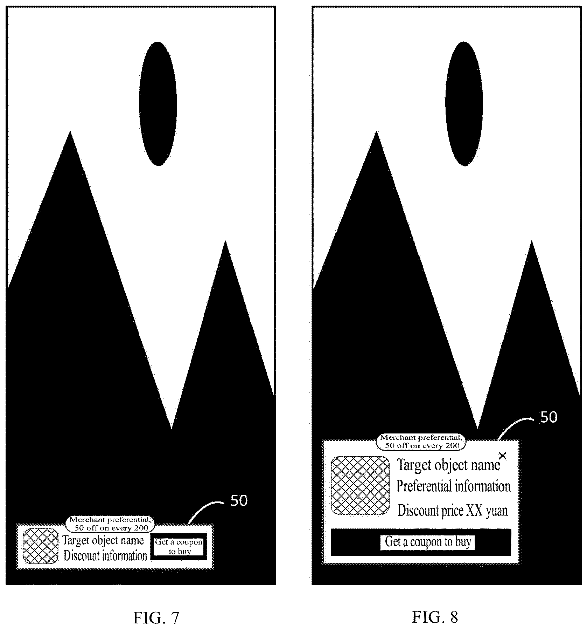

Therefore, when a recommended video is played to a target video clip corresponding to a target audio clip, association information of the target audio clip may be displayed in a first display area 40 of a video playback interface, and the recommended video is continue to be played; and when the playback of the target video clip is completed, the association information of the target audio clip displayed in the first display area 40 may be controlled to move to the second display area 50, and during the movement, display size of the association information is gradually shrinking, as shown in FIGS. 7 and 8, to stop displaying the association information, to continue displaying the association information within the second display area 50, or to display the detailed information of the association information within the second display area 50, etc. Wherein, during the movement, the movement trajectory, movement speed, and shrinking speed of the association information may be set as needed, which is not limited in this embodiment.

S404. if the second display area is the brief information display area, the association information is displayed in the second display area, and the operation ends.

S405. if the second display area is the detailed information display area, the detailed information corresponding to the association information is displayed in the second display area, and displaying of the association information is cancelled.

Wherein, for example, when the target audio clip is an audio clip containing promotional related information, the detailed information of the association information of the target audio clip may be the detailed promotional information of the target object, such as original price, current price and/or offer width etc., of the target object.

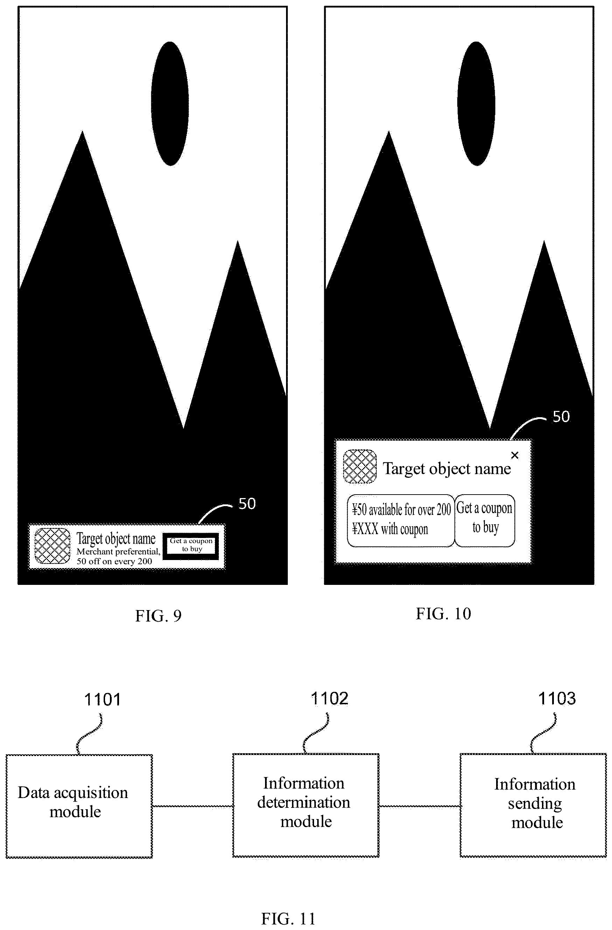

Exemplarily, when the playback of a target video clip corresponding to a target audio clip is completed, a client terminal controls association information of the target audio clip to move from a first display area 40 to a second display area 50, and when the association information is moved to the second display area 50, determines whether the second display area is a brief information display area or a detailed information display area, that is, determines whether the brief information of the target object or the detailed information of the target object is displayed in the second display area 50, and if the brief information of the target object is displayed in the second display area 50, continues to display the association information in the second display area 50, as shown in FIG. 9; if the detailed information of the target object is displayed in the second display area 50, the detailed information of the association information may be displayed in the second display area 50, as shown in FIG. 10.

Take the preset keyword being a keyword related to preferential information, and association information of a target audio clip being a target text sentence corresponding to the target audio clip as an example, when the second display area 50 is a brief information display area with a smaller size, the target text sentence may be controlled to move from the first display area 40 to a display position for the preferential information of the target object in the second display area 50 (such as the position for subtitle), and replace the preferential information displayed at that position with the association information, as shown in FIG. 9; When the second display area 50 is a detailed information display area with larger size, the target text sentence may be controlled to move from the first display area 40 to a certain position of the second display area 50 (such as a boundary position or a center position, etc.), the image, name and other information of the target object originally displayed in the second display area 50 may be controlled to shrink and adjust its display position toward the boundary, and display the detailed information of the association information in the center area of the second display area 50, as shown in FIG. 10 (FIG. 10 takes the detailed information as preferential information as an example.)

In one implementation, a user can view detailed information of a target object by triggering displayed association information of a target audio clip, at this time, the information display method provided by this embodiment may further comprise: in response to the trigger operation for the association information, switching current interface from the video playback interface to a details interface of the target object, and displaying detailed information of the target object in the details interface.

Exemplarily, a client terminal plays a recommended video of a target obj ect in a video playback interface, and when the recommended video is played to a target video clip corresponding to a target audio clip containing a preset keyword, displays association information of a target audio clip in a first display area of a video playback interface. Therefore, when a user wants to view detailed information of the target obj ect recommended in the recommended video, for example, when the user wants to view detailed information of the association information or wants to purchase the target object, the user can trigger (such as click) the association information. Accordingly, when the client terminal detects that the user triggers the association information displayed on the video playback interface, it can switch the current interface from the video playback interface to a details interface of the target object, and display the detailed information of the target object on the details interface for the user to view. Wherein, the details interface and the video playback interface are located in the same or different application software. When the details interface and the video playback interface are located in different application software, the application software where the details interface is located can be instructed to display the details interface of the target object by calling corresponding interface of the application software where the details interface is located.

In addition, when the association information of the target audio clip moves from the first display area to the second display area or is displayed in the second display area, if it is detected that the user triggers the association information, or when it is detected that the user triggers any position within the second display area (including the control position or non-control position within the second display area), the current display interface can also be switched from the video playback interface to the details interface of the target object, so that the user can view detailed information of the target object.

The information display method provided in this embodiment can guide the user to interact by displaying and moving association information of a target audio clip, and displaying the association information or detailed information of the association information after the movement, and provide the user with richer information display and interaction methods, thereby improving users' viewing and interaction experience and the recommendation effect of recommended videos.

FIG. 11 is a structural block diagram of an information display apparatus provided by an embodiment of the present disclosure. The apparatus may be implemented by software and/or hardware, and may be configured in an electronic device, typically, may be configured in a server, and may control a client terminal to display information based on audio data of a recommended video by executing the information display method. As shown in FIG. 11, the information display apparatus provided by this embodiment may comprise: a data acquisition module 1101, an information determination module 1102, and an information sending module 1103, wherein,
a data acquisition module 1101 configured to acquire audio data of a recommended video of a target object;
an information determination module 1102 configured to determine audio clip information of a target audio clip in the recommended video according to the audio data, wherein the audio clip information comprises identification information and association information, and the target audio clip includes a preset keyword; and
an information sending module 1103 configured to, when receiving an information acquisition request for the recommended video, send the audio clip information to a client terminal, such that the client terminal displays the association information if a target video clip corresponding to the target audio clip is played on the client terminal, wherein the information acquisition request is sent by the client terminal.

The information display apparatus provided by this embodiment acquires audio data of a recommended video of a target object through the data acquisition module; determines identification information and association information of a target audio clip containing a preset keywords in the recommended video according to the audio data through the information determination module; through the information sending module, when receiving an information acquisition request for the recommended video sent by a client terminal, sends the identification information and the association information of the target audio clip to the client terminal, such that the client terminal displays the association information if a target video clip corresponding to the target audio clip is played on the client terminal. This embodiment, by adopting the above technical solutions to control the client terminal to display the association information of a specific audio clip containing a preset keyword in a video playback interface when playing the specific voice, may not only display diversified information; but also realize conversion between audio dimension and visual dimension, strengthen the user's impression towards the voice broadcast in the recommended video, improve the recommendation effect of the recommended video, expand the application scope of the recommended video, and reduce the production cost of the recommended video.

In the above solution, the information determination module 1102 may comprise: a speech recognition unit configured to perform speech recognition on the audio data, to obtain speech recognition text, and acquiring Mel-scale Frequency Cepstral Coefficients feature vector of the audio data; a time determination unit configured to determine corresponding time information of each word in the audio recognition text in the audio data based on the Mel-scale Frequency Cepstral Coefficients feature vector; and an information determination unit configured to determine audio clip information of a target audio clip in the recommended video according to the speech recognition text and the time information.

In the above solution, the information determination unit may comprise: a text segmentation subunit configured to segment the speech recognition text based on the time information to obtain at least one text sentence; a sentence determination subunit configured to identify text sentences containing a preset keyword in the at least one text sentence as candidate text sentences; a sentence filtering subunit configured to filter the candidate text sentences based on preset filtering rules to obtain a target text sentence; an information determination subunit configured to use an audio clip corresponding to the target text sentence in the audio data as a target audio clip in the recommended video, and determine audio clip information of the target audio clip.

In the above solution, the information determination subunit may be configured to: use time node information corresponding to the target audio clip in the recommended video as identification information of the target audio clip, and using the target text sentence as association information of the target audio clip.

Optionally, the information display apparatus provided in this embodiment may further comprise: an information update module configured to, after the determining audio clip information of a target audio clip in the recommended video according to the audio data, when detecting that the content of the recommended video changes, re-determine the audio clip information of the target audio clip in the recommended video according to the changed audio data of the recommended video.

The information display apparatus provided by the embodiment of the present disclosure can execute the information display methods executed by a server provided by the embodiments of the present disclosure, and has corresponding functional modules for executing the information display method. Technical details that are not described in detail in this embodiment may refer to the information display methods executed by the server provided by the embodiments of the present disclosure.

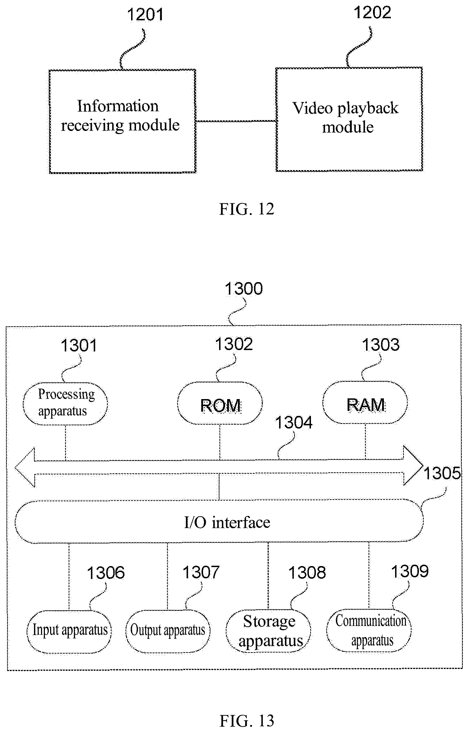

FIG. 12 is a structural block diagram of an information display apparatus provided by an embodiment of the present disclosure. The apparatus may be implemented by software and/or hardware, and may be configured in an electronic device, typically, may be configured in a mobile phone or a tablet, and can perform information display scenarios based on audio data of a recommended video by executing the information display method. As shown in FIG. 12, the information display apparatus provided by this embodiment may comprise: an information receiving module 1201 and a video playback module 1202, wherein,

The information receiving module 1201 is configured to send an information acquisition request for a recommended video of a target object to a server, and receiving audio clip information returned by the server based on the information acquisition request, wherein the audio clip information comprises identification information and association information of a target audio clip in the recommended video, and the target audio clip includes a preset keyword; and

The video playback module 1202 is configured to play the recommended video, and displaying the association information in a first display area of a video playback interface when the recommended video is played to a target video clip corresponding to the target audio clip.

The information display apparatus provided in this embodiment sends an information acquisition request for a recommended video of a target object to a server, and receives identification information and association information of a target audio clip containing a preset keyword returned by the server based on the information acquisition request through the information receiving module; plays the recommended video, and when the recommended video is played to a target video clip corresponding to the target audio clip, displays the association information in a first display area of a video playback interface through the video playback module. This embodiment, by adopting the above technical solutions to display the association information of a specific voice containing a preset keyword in a video playback interface when the recommended video is played to the specific voice, may not only display diversified information; but also realize conversion between audio dimension and visual dimension, strengthen the user's impression towards the voice broadcast in the recommended video, improve the recommendation effect of the recommended video, expand the application scope of the recommended video, and reduce the production cost of the recommended video.

In the above solution, the video playback module 1202 may be configured to: display a target text sentence corresponding to the target audio clip in the first display area of the video playback interface, wherein the target text sentence is obtained by the server performing speech recognition on the target audio clip.

Optionally, the information display apparatus provided in this embodiment may further comprise: a movement module configured to move the association information from the first display area to a second display area of the video playback interface when the playback of the target video clip is completed, and during the movement, the association information is displayed in a gradually shrinking manner, wherein the second display area is a brief information display area of the target object or a detailed information display area of the target object.

Optionally, the information display apparatus provided in this embodiment may further comprise: a first information display module configured to, after moving the association information from the first display area to the second display area of the video playback interface, if the second display area is the brief information display area, the association information is displayed in the second display area; if the second display area is the detailed information display area, the detailed information corresponding to the association information is displayed in the second display area, and displaying of the association information is cancelled.

Optionally, the information display apparatus provided in this embodiment may further comprise: a second information display module configured to display brief information of the target object in the brief information display area of the video playback interface when the recommended video is played to a first time node; and display detailed information of the target object in the detailed information display area of the video playback interface when the recommended video is played to a second time node, and displaying of the brief information is cancelled.

The information display apparatus provided by this embodiment of the present disclosure can execute the information display methods executed by a client terminal provided by the embodiments of the present disclosure, and has corresponding functional modules for executing the information display method. Technical details that are not described in detail in this embodiment may refer to the information display methods executed by the client terminal provided by the embodiments of the present disclosure.

Referring below to FIG. 13, which shows a schematic structural diagram of an electronic device (such as a server or a terminal device) 1300 suitable for implementing embodiments of the present disclosure. The terminal device in the embodiments of the present disclosure may include but not limited to a mobile terminal such as a mobile phone, a notebook, a digital broadcast receiver, a Personal Digital Assistant (PDA), a PAD (a tablet), a Portable Multimedia Player (PMP), a vehicle-mounted terminal (such as a vehicle-mounted navigation terminal), etc. and a fixed terminal such as a digital Television (TV), a desktop computer, etc. The electronic device shown in FIG. 13 is only one example and should not bring any limitations to the functions and scope of usages of the embodiments of the present disclosure.

As shown in FIG. 13, the electronic device 1300 may include a processing apparatus (for example a central processing unit, a graphics processor, etc.) 1301, which can execute various appropriate actions and processes according to a program stored in a Read-Only Memory (ROM) 1302 or a program loaded from a storage apparatus 1308 into a Random Access Memory (RAM) 1303. In the RAM 1303, various programs and data required for the operation of the electronic device 1300 are also stored. The processing apparatus 1301, ROM 1302 and RAM 1303 are connected to each other through a bus 1304. An Input/Output (I/O) interface 1305 is also connected to the bus 1304.

Generally, the following apparatus may be connected to the I/O interface 1305: an input apparatus 1306 including, for example, a touch screen, a touch pad, a keyboard, a mouse, a camera, a microphone, an accelerometer, a gyroscope, etc.; an output apparatus 1307 including, for example, a Liquid Crystal Display (LCD), a speaker, a vibrator, etc.; a storage apparatus 1308 including, for example, a magnetic tape, a hard disk, etc.; and a communication apparatus 1309. The communication apparatus 1309 may allow the electronic device 1300 to perform wireless or wired communication with other devices to exchange data. Although FIG. 13 shows an electronic device 1300 having various apparatus, it should be understood that it is not required to implement or have all of the illustrated apparatus. It can alternatively be implemented or provided with more or fewer apparatus.

In particular, according to an embodiment of the present disclosure, the process described above with reference to the flowchart can be implemented as a computer software program. For example, an embodiment of the present disclosure includes a computer program product, which includes a computer program carried on a non-transitory computer readable medium, and the computer program contains program code for executing the method shown in the flowchart. In such an embodiment, the computer program may be downloaded and installed from the network through the communication apparatus 1309, or installed from the storage apparatus 1308, or installed from the ROM 1302. When the computer program is executed by the processing apparatus 1301, the above functions defined in the methods of the embodiments of the present disclosure are executed.

It should be noted that the aforementioned computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of computer-readable storage media may include, but not limited to: an electrical connection with at least one wire, a portable computer disk, a hard disk, a Random Access Memory (RAM), a Read-Only Memory (ROM), an Erasable Programmable Read-Only Memory ((EPROM) or flash memory), an optical fiber, a Compact Disc Read-Only Memory (CD-ROM), an optical storage device, a magnetic storage device, or any suitable combination thereof. In the present disclosure, a computer-readable storage medium may be any tangible medium that contains or stores a program, and the program may be used by or in combination with an instruction execution system, apparatus, or device. In the present disclosure, a computer-readable signal medium may include a data signal propagated in a baseband or as a part of a carrier wave, in which a computer-readable program code is carried. This propagated data signal can take many forms, including but not limited to electromagnetic signals, optical signals, or any suitable combination thereof. The computer-readable signal medium may also be any computer-readable medium other than the computer-readable storage medium. The computer-readable signal medium may send, propagate, or transmit the program for use by or in combination with the instruction execution system, apparatus, or device. The program code contained on the computer-readable medium can be transmitted by any suitable medium, including but not limited to: wire, optical cable, Radio Frequency (RF), etc., or any suitable combination thereof.

In some embodiments, the client terminal and server can communicate with any currently known or future developed network protocol such as HTTP (HyperText Transfer Protocol), and can interconnect with digital data communication (for example, communication network) in any form or medium. Examples of communication networks include a Local Area Network ("LAN"), a Wide Area Network ("WAN"), an international network (for example, the Internet), and an end-to-end network (for example, an ad hoc end-to-end network), as well as any currently known or future developed networks.

The aforementioned computer-readable medium may be included in aforementioned electronic devices; or it may exist alone without being assembled into the electronic device.

The above computer-readable medium carries at least one program, which, when executed by the electronic device, causes the electronic device to:
acquire audio data of a recommended video of a target obj ect; determine audio clip information of a target audio clip in the recommended video according to the audio data, wherein the audio clip information comprises identification information and association information, and the target audio clip includes a preset keyword; and when receiving an information acquisition request for the recommended video, send the audio clip information to a client terminal, such that the client terminal displays the association information if a target video clip corresponding to the target audio clip is played on the client terminal, wherein the information acquisition request is sent by the client terminal, or,
send an information acquisition request for a recommended video of a target object to a server, and receiving audio clip information returned by the server based on the information acquisition request, wherein the audio clip information comprises identification information and association information of a target audio clip in the recommended video, and the target audio clip includes a preset keyword; play the recommended video, and when the recommended video is played to a target video clip corresponding to the target audio clip, display the association information in a first display area of a video playback interface.

The computer program code for performing the operations of the present disclosure can be written in one or more programming languages or a combination thereof. The aforementioned programming languages include but not limited to object-oriented programming languages such as Java, Smalltalk, C++, and include conventional procedural programming languages such as "C" language or similar programming languages. The program code can be executed entirely on a user's computer, partly executed on a user's computer, executed as an independent software package, partly executed on a user's computer and partly executed on a remote computer, or entirely executed on a remote computer or server. In the case of involving a remote computer, the remote computer can be connected to a user's computer through any kind of network, including a local area network (LAN) or a wide area network (WAN), or it can be connected to an external computer (for example, connected by using Internet provided by an Internet service provider).

The flowcharts and block diagrams in the accompanying drawings illustrate possible architecture, function, and operation implementations of a system, method, and computer program product according to various embodiments of the present disclosure. In this regard, each block in a flowchart or block diagram may represent a module, program segment, or part of code, which contains at least one executable instruction for realizing specified logic functions. It should also be noted that, in some alternative implementations, functions marked in a block may also occur in a different order than the order marked in the drawings. For example, two blocks shown in succession can actually be executed substantially in parallel, and they can sometimes be executed in the reverse order, depending on functions involved. It should also be noted that each block in a block diagram and/or flowchart, and the combination of blocks in a block diagram and/or flowchart, can be implemented by a dedicated hardware-based system that performs the specified functions or operations, or it can be implemented by a combination of dedicated hardware and computer instructions.

The units involved in the embodiments of the present disclosure can be implemented in software or hardware. Wherein, the name of the module does not constitute a limitation on the unit itself under certain circumstances.

The functions described herein above may be performed at least in part by at least one hardware logic component. For example, without limitation, exemplary types of hardware logic components that may be used include: Field Programmable Gate Array (FPGA), Application Specific Integrated Circuit (ASIC), Application Specific Standard Parts (ASSP), System on Chip (SOC), Complex Programmable Logic Device (CPLD), etc.

In the context of the present disclosure, a machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but not limited to, an electronic, magnetic, optical, electromagnetic, infrared, or semiconductor system, apparatus, or device, or any suitable combination thereof. More specific examples of machine-readable storage media may include an electrical connection based on at least one wire, a portable computer disk, a hard disk, a Random Access Memory (RAM), a Read-Only Memory (ROM), an Erasable Programmable Read-Only Memory (EPROM or flash memory), an optical fiber, a Compact Disk Read-Only Memory (CD-ROM), an optical storage device, a magnetic storage device, or any suitable combination thereof.

According to at least one embodiment of the present disclosure, Example 1 provides an information display method, comprising: acquiring audio data of a recommended video of a target object; determining audio clip information of a target audio clip in the recommended video according to the audio data, wherein the audio clip information comprises identification information and association information, and the target audio clip includes a preset keyword; and
when receiving an information acquisition request for the recommended video, sending the audio clip information to a client terminal, such that the client terminal displays the association information if a target video clip corresponding to the target audio clip is played on the client terminal, wherein the information acquisition request is sent by the client terminal.

According to at least one embodiment of the present disclosure, Example 2 according to the method of Example 1, the determining audio clip information of a target audio clip in the recommended video according to the audio data comprising:
performing speech recognition on the audio data, to obtain speech recognition text, and acquiring Mel-scale Frequency Cepstral Coefficients feature vector of the audio data;
determining corresponding time information of each word in the audio recognition text in the audio data based on the Mel-scale Frequency Cepstral Coefficients feature vector; and
determining the audio clip information of the target audio clip in the recommended video according to the speech recognition text and the time information.

According to at least one embodiment of the present disclosure, Example 3 according to the method of Example 2, the determining the audio clip information of the target audio clip in the recommended video according to the speech recognition text and the time information comprising:
segmenting the speech recognition text based on the time information to obtain at least one text sentence;
identifying text sentences containing a preset keyword in the at least one text sentence as candidate text sentences;
filtering the candidate text sentences based on a preset filtering rule to obtain a target text sentence; and
using an audio clip corresponding to the target text sentence in the audio data as a target audio clip in the recommended video, and determining audio clip information of the target audio clip.

According to at least one embodiment of the present disclosure, Example 4 according to the method of Example 3, the determining audio clip information of the target audio clip comprising:
using time node information corresponding to the target audio clip in the recommended video as identification information of the target audio clip, and using the target text sentence as association information of the target audio clip.

According to at least one embodiment of the present disclosure, Example 5 according to the method of any one of Examples 1-4, after the determining audio clip information of a target audio clip in the recommended video according to the audio data, further comprising: when detecting that the content of the recommended video changes, re-determining the audio clip information of the target audio clip in the recommended video according to the changed audio data of the recommended video.

According to at least one embodiment of the present disclosure, Example 6 provides an information display method, comprising: sending an information acquisition request for a recommended video of a target object to a server, and receiving audio clip information returned by the server based on the information acquisition request, wherein the audio clip information comprises identification information and association information of a target audio clip in the recommended video, and the target audio clip includes a preset keyword; and
playing the recommended video, and when the recommended video is played to a target video clip corresponding to the target audio clip, displaying the association information in a first display area of a video playback interface.

According to at least one embodiment of the present disclosure, Example 7 according to the method of Example 6, the displaying the association information in a first display area of a video playback interface comprising:
displaying a target text sentence corresponding to the target audio clip in the first display area of the video playback interface, wherein the target text sentence is obtained by the server performing speech recognition on the target audio clip.

According to at least one embodiment of the present disclosure, Example 8 according to the method of Example 6 or 7, further comprising:
when the playback of the target video clip is completed, moving the association information from the first display area to a second display area of the video playback interface, and during the movement, displaying the association information in a gradually shrinking manner, wherein the second display area is a brief information display area of the target object or a detailed information display area of the target object.

According to at least one embodiment of the present disclosure, Example 9 according to the method of Example 8, after moving the association information from the first display area to the second display area of the video playback interface, further comprising: if the second display area is the brief information display area, the association information is displayed in the second display area; if the second display area is the detailed information display area, the detailed information corresponding to the association information is displayed in the second display area, and displaying of the association information is cancelled.

According to at least one embodiment of the present disclosure, Example 10 according to the method of Example 8, further comprising:

when the recommended video is played to a first time node, the brief information of the target object is displayed in the brief information display area of the video playback interface; and when the recommended video is played to a second time node, the detailed information of the target object is displayed in the detailed information display area of the video playback interface, and the displaying of the brief information is cancelled.

According to at least one embodiment of the present disclosure, Example 11 provides an information display apparatus, comprising: a data acquisition module configured to acquire audio data of a recommended video of a target object;
an information determination module configured to determine audio clip information of a target audio clip in the recommended video according to the audio data, wherein the audio clip information comprises identification information and association information, and the target audio clip includes a preset keyword; and an information sending module configured to, when receiving an information acquisition request for the recommended video, send the audio clip information to a client terminal, such that the client terminal displays the association information if a target video clip corresponding to the target audio clip is played on the client terminal, wherein the information acquisition request is sent by the client terminal.

According to at least one embodiment of the present disclosure, Example 12 provides an information display apparatus, comprising: an information receiving module configured to send an information acquisition request for a recommended video of a target object to a server, and receive audio clip information returned by the server based on the information acquisition request, wherein the audio clip information comprises identification information and association information of a target audio clip in the recommended video, and the target audio clip includes a preset keyword; and
a video playback module configured to play the recommended video, and when the recommended video is played to a target video clip corresponding to the target audio clip, display the association information in a first display area of a video playback interface.

According to at least one embodiment of the present disclosure, Example 13 provides an electronic device, comprising:
at least one processor;
a memory configured to store at least one program,
when executed by the at least one processor, the at least one program causes the at least one processor to implement the information display method of any one of Examples 1-10.

According to at least one embodiment of the present disclosure, Example 14 provides a computer-readable storage medium having a computer program stored thereon, which, when executed by a processor, implements the information display method of any one of Examples 1-10.

In addition, although various operations are depicted in a specific order, this should not be understood as requiring these operations to be performed in the specific order shown or performed in a sequential order. Under certain circumstances, multitasking and parallel processing may be advantageous. Likewise, although several specific implementation details are included in above discussion, these should not be construed as limiting the scope of the present disclosure. Certain features that are described in the context of separate embodiments can also be implemented in combination in a single embodiment. Conversely, various features described in the context of a single embodiment can also be implemented in multiple embodiments individually or in any suitable sub-combination.

Although the subject matter has been described in a language specific to structural features and/or logical actions of the method, it should be understood that the subj ect matter defined in the appended claims is not necessarily limited to the specific features or actions described above. Rather, the specific features and actions described above are merely exemplary forms of implementing the claims.

## Claims

1. An information display method, comprising:
acquiring audio data of a recommended video of a target object;
determining audio clip information of a target audio clip in the recommended video according to the audio data, wherein the audio clip information comprises identification information and association information, and the target audio clip includes a preset keyword; and
in response to receiving an information acquisition request for the recommended video, sending the audio clip information to a client terminal, such that the client terminal displays the association information if the target video clip corresponding to the target audio clip is played on the client terminal, wherein the information acquisition request is sent by the client terminal.

2. The method according to claim 1, wherein, the determining audio clip information of a target audio clip in the recommended video according to the audio data comprising:
performing speech recognition on the audio data, to obtain speech recognition text, and acquiring Mel-scale Frequency Cepstral Coefficients feature vector of the audio data;
determining corresponding time information of each word in the audio recognition text in the audio data based on the Mel-scale Frequency Cepstral Coefficients feature vector; and
determining the audio clip information of the target audio clip in the recommended video according to the speech recognition text and the time information.

3. The method according to claim 2, wherein, the determining the audio clip information of the target audio clip in the recommended video according to the speech recognition text and the time information comprising:
segmenting the speech recognition text based on the time information to obtain at least one text sentence;
identifying text sentences containing a preset keyword in the at least one text sentence as candidate text sentences;
filtering the candidate text sentences based on a preset filtering rule to obtain a target text sentence; and
using an audio clip corresponding to the target text sentence in the audio data as a target audio clip in the recommended video, and determining audio clip information of the target audio clip.

4. The method according to claim 3, wherein, the determining audio clip information of the target audio clip comprising:
using time node information corresponding to the target audio clip in the recommended video as identification information of the target audio clip, and using the target text sentence as association information of the target audio clip.

5. The method according to any one of claims 1 to 4, after the determining audio clip information of a target audio clip in the recommended video according to the audio data, further comprising:
in response to detecting that the content of the recommended video changes, re-determining the audio clip information of the target audio clip in the recommended video according to the changed audio data of the recommended video.

6. An information display method, comprising:
sending an information acquisition request for a recommended video of a target object to a server, and receiving audio clip information returned by the server based on the information acquisition request, wherein the audio clip information comprises identification information and association information of a target audio clip in the recommended video, and the target audio clip includes a preset keyword; and
playing the recommended video, and in response to the recommended video being played to a target video clip corresponding to the target audio clip, displaying the association information in a first display area of a video playback interface.

7. The method according to claim 6, wherein, the displaying the association information in a first display area of a video playback interface comprising:
displaying a target text sentence corresponding to the target audio clip in the first display area of the video playback interface, wherein the target text sentence is obtained by the server performing speech recognition on the target audio clip.

8. The method according to claim 6 or 7, further comprising:
in response to the playback of the target video clip being completed, moving the association information from the first display area to a second display area of the video playback interface, and during the movement, displaying the association information in a gradually shrinking manner, wherein the second display area is a brief information display area of the target object or a detailed information display area of the target object.

9. The method according to claim 8, after moving the association information from the first display area to the second display area of the video playback interface, further comprising:
in a case that the second display area is the brief information display area, the association information is displayed in the second display area;
in a case that the second display area is the detailed information display area, the detailed information corresponding to the association information is displayed in the second display area, and displaying of the association information is cancelled.

10. The method of claim 8, further comprising:
in response to the recommended video being played to a first time node, the brief information of the target object is displayed in the brief information display area of the video playback interface; and
in response to the recommended video being played to a second time node, the detailed information of the target object is displayed in the detailed information display area of the video playback interface, and the displaying of the brief information is cancelled.

11. An information display apparatus, comprising:
a data acquisition module configured to acquire audio data of a recommended video of a target object;
an information determination module configured to determine audio clip information of a target audio clip in the recommended video according to the audio data, wherein the audio clip information comprises identification information and association information, and the target audio clip includes a preset keyword; and
an information sending module configured to, in response to receiving an information acquisition request for the recommended video, send the audio clip information to a client terminal, such that the client terminal displays the association information if a target video clip corresponding to the target audio clip is played on the client terminal, wherein the information acquisition request is sent by the client terminal.

12. An information display apparatus, comprising:
an information receiving module configured to send an information acquisition request for a recommended video of a target object to a server, and receive audio clip information returned by the server based on the information acquisition request, wherein the audio clip information comprises identification information and association information of a target audio clip in the recommended video, and the target audio clip includes a preset keyword; and
a video playback module configured to play the recommended video, and in response to the recommended video being played to a target video clip corresponding to the target audio clip, display the association information in a first display area of a video playback interface.

13. An electronic device, comprising:
at least one processor;
a memory configured to store at least one program,
when executed by the at least one processor, the at least one program causes the at least one processor to implement the information display method of any one of claims 1-10.

14. A computer-readable storage medium having a computer program stored thereon, which, when executed by a processor, implements the information display method of any one of claims 1-10.
